# EUROPÄISCHE PATENTANMELDUNG

(11) **EP 1 733 617 A1**
(43) Veröffentlichungstag der Anmeldung: **20.12.2006**
(21) Anmeldenummer: 05012890.9
(22) Anmeldetag: 15.06.2005
(51) Int. Cl.: A01N 63/00, A01N 25/08, A01M 1/00

(54) **Verfahren zur biologischen Bekämpfung von Schädlingen in Räumen**

(71) Anmelder: Binker Materialschutz GmbH, 91207 Lauf (DE)
(72) Erfinder: Binker, Gerhard, Dr., 90607 Rückersdorf (DE); Binker, Joachim, 90518 Rasch (DE)
(74) Vertreter: nospat Patentanwälte

(57) **Zusammenfassung**

Die Erfindung betrifft ein Verfahren zur Bekämpfung von Holzschädlingen, insbesondere Anobien, in einem Behandlungsraum, durch Ausbringen natürlicher Feinde (Nützlinge), wobei zur Verringerung des Innenraumvolumens und damit der klimatisch auf die Bedürfnisse des Nützlings einzustellende Atmosphäre und/oder des den Nützlingen zur Verfügung stehenden Raums ein oder mehrere luftgefüllte Hohlkörper vor dem Ausbringen der natürlichen Feinde (Nützlinge) eingebracht werden.

## Beschreibung

Die Erfindung betrifft ein Verfahren zur Bekämpfung von Holzschädlingen in einem Behandlungsraum.

Ein derartiges Verfahren ist auf der Internetpräsenz "Katholisch.de" "Wespen im Kampf gegen den Holzwurm erfolgreich" am 20.04.2005 beschrieben. Dort wurde der Cranach-Altar im Dom in Erfurt in Folie eingehaust und in die Folieneinhausung die Lagererzwespen entlassen. Die Lagererzwespen töteten die im Holz sitzenden Larven des Gewöhnlichen Nagekäfers (Anobium punctatum De Geer). Der gesamte Dom konnte jedoch nicht behandelt werden, da er das entsprechende Klima für die Entwicklung der Lagererzwespen nicht hatte. Somit konnten nicht alle Kunstwerke im Dom gegen den Holzschädling bekämpft werden. Ferner besteht ein Problem darin, die Wespen nach der erfolgreichen Bekämpfung zu entfernen.

Aufgabe der Erfindung ist es, ein Verfahren zu schaffen, welches eine biologisch und ökologisch verträgliche Bekämpfung auch in großen Räumen effektiv und kostengünstig möglich macht.

Die Aufgabe wird mit einem Verfahren mit den Merkmalen des Anspruchs 1 gelöst.

Erfindungsgemäß wurde erkannt, dass sich z.B. auch in großen Kircheninnenräumen Nützlinge, wie Lagererzwespen oder Trichogramma-Wespen, jederzeit einsetzen lassen und alle Kunstwerke von Holzschädlingen befreien, wenn der Kircheninnenraum geeignet so klimatisiert wird, dass die Wespen sich entwickeln, vermehren oder auf die Suche nach Larven gehen können. Dies war bislang aus Kostengründen nicht möglich, vielmehr mussten Zeiträume abgepasst werden, in denen die klimatischen Verhältnisse sich von selbst einstellen. Dies kann bei ungünstiger Wetterlage dazu führen, dass eine biologische Bekämpfung in manchen Jahren und bei bestimmten Gebäuden gar nicht möglich ist. Wird deshalb der gesamte Raum künstlich klimatisiert ist dies aber sehr zeitaufwändig. Zudem liegen die Kosten für die biologische Bekämpfung dann soweit über denen herkömmlicher (Begasung etc.) Verfahren, dass die biologische Bekämpfung nicht konkurrenzfähig ist.

Deshalb wird erfindungsgemäß im Kircheninnenraum zumindest ein überdimensionaler gas- oder luftgefüllter Hohlkörper oder Ballon installiert oder aufgeblasen, bevorzugt mit einer Thermohülle, so dass um den Ballon herum klimatisiert werden kann, wodurch sich ein erheblicher energieersparender Effekt ergibt, da nicht der gesamte Kircheninnenraum klimatisiert werden muss.

Da die Klimatisierung auch eine Befeuchtung der Luftatmosphäre im Kircheninnenraum beinhaltet, wird auch der Wassereinsatz zur Befeuchtung reduziert, was ebenfalls kostensparend ist. Außerdem wurde gefunden, dass durch das Einbringen eines Hohlkörpers in den Kircheninnenraum die Wespen gezielt auf die Holzobjekte gelenkt werden, da der Flugraum deutlich reduziert ist und die Wespen sofort gezielt die Holzobjekte ansteuern.

Hierdurch wird es möglich, auch große Räume mit z,.B. Lagererzwespen "zu behandeln". Eine kostenaufwendige Folieneinhausung aller Kunstwerke, wie im Stand der Technik beschrieben, wird dadurch vermieden.

Beim Stand der Technik ist zudem nachteilig, dass nur die Larven im Holz von den Lagererzwespen erfasst werden, nicht jedoch von den Holzschädlingen abgelegte Eier, Puppen und Käfer.

Letztere sitzen vor allem an den Kirchenwänden, den Kunstwerken, Decken und Böden.

Deshalb wird in einer bevorzugten Ausführungsform erfindungsgemäß nach dem Einsatz der Lagererzwespen das sich um den Ballon befindende Raumvolumen noch mit einem Insektizid vernebelt, so dass auch die Käfer und Eier des Schädlings, wie des des gewöhnlichen Nagekäfers, abgetötet werden, so dass diese die durch die Lagererzwespen vom Holzwurm befreiten Kunstwerke nicht mehr erneut,infizieren können.

Als besonders vorteilhaft hat sich erwiesen, bei einer weiteren vorteilhaften Ausführungsform anstelle eines Insektizids Bazillen bzw. Bakterien oder noch besser pathogene Pilze auszubringen, wie z.B. Beauveria bassiana, Metarhizium anisopliae, Paecilomyces fumosoroseus und Paecilomyces farinosus. Dadurch erhält man ein zweistufiges vollbiologisches Verfahren, so dass zunächst mit Hilfe der Lagererzwespen die Larven des Holzwurms in den Kunstwerken abgetötet werden und anschließend die vom Holzwurm abgelegten Eier und seine Käfer mit den Pilzen und/oder Bazillen abgetötet werden. Hierbei sterben dann auch die Lagererzwespen ab, damit sie z.B. den nach der Behandlung wieder stattfindenden Kirchenbetrieb nicht stören und ungefährdet entfernt werden können.

Bei der Erfindung ist von Vorteil, dass der Holzwurm-Befall fast ausschließlich biologisch und rückstandsfrei bekämpft wird. Diese Ausführungsform des zweistufigen biologischen Verfahrens ist selbstverständlich auch in kleinen Räumen und/oder ohne die Verringerung eines Raumvolumens möglich und nicht nur auf den Holzwurm beschränkt.

Weiter vorteilhafte Ausgestaltungen der Erfindung ergeben sich aus den Unteransprüchen und dem nachfolgenden Beispiel.

### Beispiel:

Ein großer Kircheninnenraum, z.B. Klosterkirche, beherbergt Kunstwerke aus Holz, wie Altäre, Orgel, Kanzel etc., die sehr stark vom Gewöhnlichen Nagekäfer (Anobium punctatum De Geer) befallen sind. Im Kircheninnenraum wird ein überdimensionaler Luftballon aufgeblasen und dann erfolgt eine Klimatisierung des den Ballon umgebenden Luftraumes, so dass dessen Temperatur bei über 22°C und die Luftfeuchtigkeit zwischen 55-70% rel. liegt.

Zur Klimahomogenisierung werden Ventilatoren eingesetzt. Anschließend werden 4.000 Lagererzwespen (Lariophagos distinguendus) in den Kircheninnenraum entlassen. Die Wespen schwärmen aus und gehen auf Suche nach Holzwurmlarven im Holz. Mit ihrem Legestachel stechen sie die Holzwurmlarven an und die Holzwurmlarven sterben letztendlich ab. Nach ca. 10 Tagen werden nochmals 4.000 Lagererzwespen in den Kircheninnenraum entlassen, um die letzten Holzwurmlarven noch abzutöten. Anschließend wird dann der Kircheninnenraum durch Besprühen oder Bestäuben mit einer Beauveria bassiana -Lösung oder Pulver oder Suspension beaufschlagt, um auch die auf dem Holz von den Holzwurmkäfern abgelegten Eier oder die Holzwurmkäfer selbst abzutöten. Alternativ oder zusätzlich kann auch ein Insektizid, wie Chlopyrifos, mit kurzer Halbwertszeit vernebelt oder versprüht werden. Auch evtl. noch vorhandene Lagererzwespen werden dann abgetötet, so dass ein weiterer Kirchenbetrieb möglich wird. Die Klimatisierung wird vorher abgestellt und beendet und schließlich auch der Ballon entlüftet und abtransportiert. Die Kirche ist von Holzschädlingen befreit.

Bei der Erfindung ist von Vorteil, dass die Larven des Holzschädlings schnell, mit hoher Effektivität und kostengünstig auch in großen Räumen biologisch bekämpft werden können. Werden die Wespen und weitere Nützlingen oder Schädlingen nachfolgend mit Bakterien und/oder Pilzen oder Ähnlichem abgetötet, gelingt ein effektives zweistufiges biologisch und ökologisch unbedenkliches Bekämpfungsverfahren.

## Patentansprüche

1. Verfahren zur Bekämpfung von Holzschädlingen, insbesondere Anobien, in einem Behandlungsraum, durch Ausbringen natürlicher Feinde (Nützlinge), **dadurch gekennzeichnet, dass** zur Verringerung des Innenraumvolumens und damit der klimatisch auf die Bedürfnisse des Nützlings einzustellende Atmosphäre und/oder des den Nützlingen zur Verfügung stehenden Raums ein oder mehrere luftgefüllte Hohlkörper vor dem Ausbringen der natürlichen Feinde (Nützlinge) eingebracht werden.

2. Verfahren nach Anspruch 1, **dadurch gekennzeichnet, dass** das Luftvolumen zwischen dem Hohlkörper und den Raumbegrenzungsflächen klimatisiert wird, wobei Temperaturen über 18°C und Luftfeuchtigkeiten zwischen 50 und 70% rel. vorliegen.

3. Verfahren nach Anspruch 1 oder Anspruch 2, **dadurch gekennzeichnet, dass** das Ausbringen der natürlichen Feinde (Nützlinge) in mehreren zeitlich beabstandeten Schritten erfolgt.

4. Verfahren nach einem der vorhergehenden Ansprüche, **dadurch gekennzeichnet, dass** nach dem Einsatz der natürlichen Feinde (Nützlinge) noch verbleibende abgelegte Eier oder schädliche Käfer durch Ausbringen eines Insektizids abgetötet werden.

5. Verfahren nach einem der vorgehenden Ansprüche, **dadurch gekennzeichnet, dass** nach dem Einsatz der natürlichen Feinde (Nützlinge) abgelegte Eier oder schädliche Käfer durch Ausbringen eines Bazillus und/oder Bakteriums und/oder Pilzes oder unterschiedliche Arten dieser Formen abgetötet werden.

6. Verfahren nach einem der vorhergehenden Ansprüche, **dadurch gekennzeichnet, dass** nach dem Einsatz der natürlichen Feinde restliche noch nicht abgestorbene natürliche Feinde, wie Wespen, durch ein Insektizid und/oder einen Bazillus oder Bazillen und/oder Pilze abgetötet werden.

7. Verfahren nach einem der vorgehenden Ansprüche, **dadurch gekennzeichnet, dass** als Pilze pathogene Pilze verwendet werden.

8. Verfahren nach Anspruch 7, **dadurch gekennzeichnet, dass** als pathogener Pilz Beauveria bassiana und/oder Metarhizium anisopliae und/oder Paecilomyces fumosoroseus und/oder Paecilomyces farinosus verwendet wird/werden.

9. Verfahren nach einem der vorgehenden Ansprüche, **dadurch gekennzeichnet, dass** der oder die Bazillen und/oder Bakterien und/oder Pilze so ausgewählt werden, dass sie artspezifisch auf den Nützling und/oder den zu bekämpfenden Schädling wirken.

10. Verfahren nach einem der vorgehenden Ansprüche, **dadurch gekennzeichnet, dass** eine einzige Art Bazillen und/oder Bakterien und/oder Pilze sowohl für den Nützling als auch den Schädling oder unterschiedliche Bazillen und/oder Bakterien und/oder Pilze jeweils artspezifisch für den Nützling und artspezifisch für den Schädling verwendet werden.
